(19)

**Europäisches Patentamt**

**European Patent Office**

**Office européen des brevets**

(11)  **EP 2 975 867 A1**

(12)  **EUROPEAN PATENT APPLICATION**

(43) Date of publication:
    **20.01.2016 Bulletin 2016/03**

(51) Int Cl.:
    **H04W 4/02** *(2009.01)*     **H04W 4/04** *(2009.01)*
    **G08G 1/01** *(2006.01)*     **B60W 40/09** *(2012.01)*

(21) Application number: **14382282.3**

(22) Date of filing: **17.07.2014**

(84) Designated Contracting States:
    **AL AT BE BG CH CY CZ DE DK EE ES FI FR GB
    GR HR HU IE IS IT LI LT LU LV MC MK MT NL NO
    PL PT RO RS SE SI SK SM TR**
    Designated Extension States:
    **BA ME**

(71) Applicant: **Telefonica Digital España, S.L.U.**
    **28013 Madrid (ES)**

(72) Inventors:
    • **Fernandez Pozo, Rubén**
     **28013 Madrid (ES)**

• **Hernández Gómez, Luis, Alfonso**
 **28013 Madrid (ES)**
• **López Meco, David**
 **28013 Madrid (ES)**
• **Bernat Vercher, Jesús**
 **28013 Madrid (ES)**
• **García Muñoz, Victor, Manuel**
 **28013 Madrid (ES)**

(74) Representative: **Carpintero Lopez, Francisco et al**
    **Herrero & Asociados, S.L.**
    **Alcalá 35**
    **28014 Madrid (ES)**

(54)  **Method for detecting driving events of a vehicle based on a smartphone**

(57)     Present invention refers to a method for detecting driving events of a vehicle. The method comprises the steps of: obtaining at least one motion data signal from sensors of a mobile device located in the vehicle; sending the at least one motion data signal from the sensors to a processing module; computing, in the processing module, an energy measurement of the at least one motion data signal; selecting time segments where the energy measurement of the at least one motion data signal exceeds a first threshold; analyzing the at least one motion data signal in said time segments; and assigning a driving event to each time segment.

**EP 2 975 867 A1**

**Description**

## TECHNICAL FIELD OF THE INVENTION

Present invention generally relates to monitoring systems and more specifically relates to driving monitoring systems based on the sensors embedded in common smartphones.

## BACKGROUND OF THE INVENTION

Nowadays, most people have smartphones which, at least, are equipped with embedded low-cost sensors, such as accelerometers, gyroscopes, GPS, magnetometers, etc., that allow the development of new applications which, through processing of sensor data, identify the activities the user is involved on.

Among them, those directed to the identification of driver styles or driving behavior are attracting attention and investment for developing new services based on assessing the condition of the driver. Thus, several applications are being proposed in different fields, as vehicle fleet monitoring or insurance companies, or for specific applications such as drunk-driving detection or inefficient and unsafe driving behavior.

Prior art offer different solutions for driving monitoring based on the use of high-precision accelerometers, mainly relying on precise measurements of longitudinal and lateral accelerations. Latest generations of smartphones already embed a MEMS IMU (Micro-electromechanical Systems and Inertial Measurement Unit) composed of an accelerometer and a gyroscope. At the beginning they were basic sensors for basic HMI (Human-Computer Interaction) tasks, mainly for switching screen orientation according to the estimated device position, but they are becoming more and more precise, so the quality and precision of current smartphones as sensing devices are leading to new innovative applications as those based on cost-effective driving monitoring systems.

As it is said before, there are already some works directed to estimate the driving style or driver's behavior, which use smartphones as sensor platforms. Some of them combining the use of motion sensors with geo-location information provided by GPS, involving a high battery power consumption. In most of the cases the smartphone must also be placed in a fixed holder, or it is assumed that the device is fixed-aligned according to the vehicle reference coordinate system. There are also some approaches where the smartphone is not assumed to be in any particular position, but a calibration procedure is required to determine, based on motion sensor information, what vehicle direction is longitudinal.

Solutions from prior art often go to pattern matching algorithms, such as Dynamic Time Warping (DTW), to compare the drivers' driving style to predefined patterns: aggressive turns, aggressive U-turns, aggressive braking, aggressive lane change, etc...

Therefore, existing proposals involve different disadvantages as high consumption of smartphone battery power which may lead to a rejection of the user for using this type of applications. Using GPS information demands an important power consumption, so the battery charge is critically run down and this represents a main issue for the users of smartphones.

The requirement of placing the smartphone in a fixed position during a trip is also an important limitation for the usability and acceptability of the system. As this is a hard requirement to be met by the users, the accuracy of this kind of solutions is highly compromised.

Furthermore, existing proposals which are unaware about the smartphone position, do not address specific procedures for making the driving-event detection process robust against uncontrolled movements or displacements usually present when a smartphone is located on a free position (dashboard, driver's pocket, copilot's seat...) in a moving vehicle.

Therefore, prior art is then missing a solution to this problem, where users of a smartphone may take advantage of their smartphones for obtaining valuable information of driving events without paying in return a big loss of battery or other limitations in terms of mobility. A flexible method to detect driving events based on the smartphone of the user travelling in a vehicle would be then a valuable contribution.

## SUMMARY OF THE INVENTION

Present invention solves the aforementioned problems by presenting a method for detecting driving events of a vehicle. The method comprises the steps of:

a) obtaining at least one motion data signal from sensors of a mobile device located in the vehicle;
b) sending the at least one motion data signal from the sensors to a processing module; c) computing, in the processing module, an energy measurement of the at least one motion data signal,
d) selecting time segments where the energy measurement of the at least one motion data signal exceeds a first threshold;

e) analyzing the at least one motion data signal in said time segments;

f) assigning a driving event to each time segment, based on step e).

Additionally, present invention may comprise the steps of:

- comparing, in each time segment corresponding to a driving event, a maximum energy value of the at least one motion data signal with a second threshold;

- in the case of said the second threshold is exceeded in a certain time segment, determining an aggressive driving event for said time segment.

One embodiment of the invention may comprise combining two or more close driving events into a single driving event.

One embodiment of the invention may comprise, when assigning a driving event to a time segment, analyzing surrounding driving events.

Optionally, present invention may comprise in one particular embodiment the step of filtering, through at least one low-pass filter, the at least one motion data signal to remove high-pass frequencies, which are not related to driving events. Thus, any manipulation of the mobile device may be ignored for next steps.

Additionally, one embodiment of present invention may comprise resampling and interpolating the at least one motion data signal at a certain sampling frequency.

The effect of the gravity may be estimated in the at least one motion data signal and compensated said effect before sending the at least one motion data signal to the processing module, according to one embodiment of the invention.

Obtaining the at least one motion data signal, may comprise, according to one embodiment of the invention, measuring an acceleration value of the mobile device, using an accelerometer sensor embedded in the mobile device.

Obtaining the at least one motion data signal, may comprise, according to one embodiment of the invention, measuring an angular velocity of the mobile device, using a gyroscope sensor embedded in the mobile device.

The driving events may be selected from the following types: manipulation events, turn events, acceleration events, stop events and zig-zag events.

A driving event, according to one embodiment of the invention, may comprise the following information: type of event; start time of the event; end time of the event; and maximum value of the motion data signal within the time segment assigned.

Analyzing the at least one motion data signal, may further comprise in one embodiment of the invention, using an orientation vector associated to the vehicle, being said orientation vector based on a combination of previous acceleration and stop events.

A second aspect of the invention refers to a system for detecting driving events of a vehicle. The system comprises:

- a mobile device located in the vehicle with sensors configured for obtaining at least one motion data signal; the mobile device is configured for sending the at least one motion data signal obtained by the sensors to a processing module;

- a processing module configured for computing an energy measurement of the at least one motion data signal; selecting time segments where the energy measurement of the at least one motion data signal exceeds a first threshold; analyzing the at least one motion data signal in said time segments; and assigning a driving event to each time segment, based on the motion data signal analyzed.

The mobile device, according to one embodiment of the invention, is a smartphone.

A final aspect of the invention refers to a computer program product comprising computer program code adapted to perform the method of the invention when said program code is executed on a computer, a digital signal processor, a field-programmable gate array, an application-specific integrated circuit, a micro-processor, a micro-controller, or any other form of programmable hardware.

## DESCRIPTION OF THE DRAWINGS

To complete the description that is being made and with the object of assisting in a better understanding of the characteristics of the invention, in accordance with a preferred example of practical embodiment thereof, accompanying said description as an integral part thereof, is a drawing wherein, by way of illustration and not restrictively, the following has been represented:

**Figure 1.-** shows the pre-processing component, according to one embodiment of the invention.

**Figure 2.-** shows the event detection algorithm, according to one embodiment of the invention, setting a threshold T for the energy of the signals.

**Figure 3.-** shows one particular embodiment of the invention, where the detection of basic event follows a hierarchical scheme.

**Figure 4.-** shows the whole processing of the aggressive event detection, according to one embodiment of the invention.

## DETAILED DESCRIPTION OF THE INVENTION

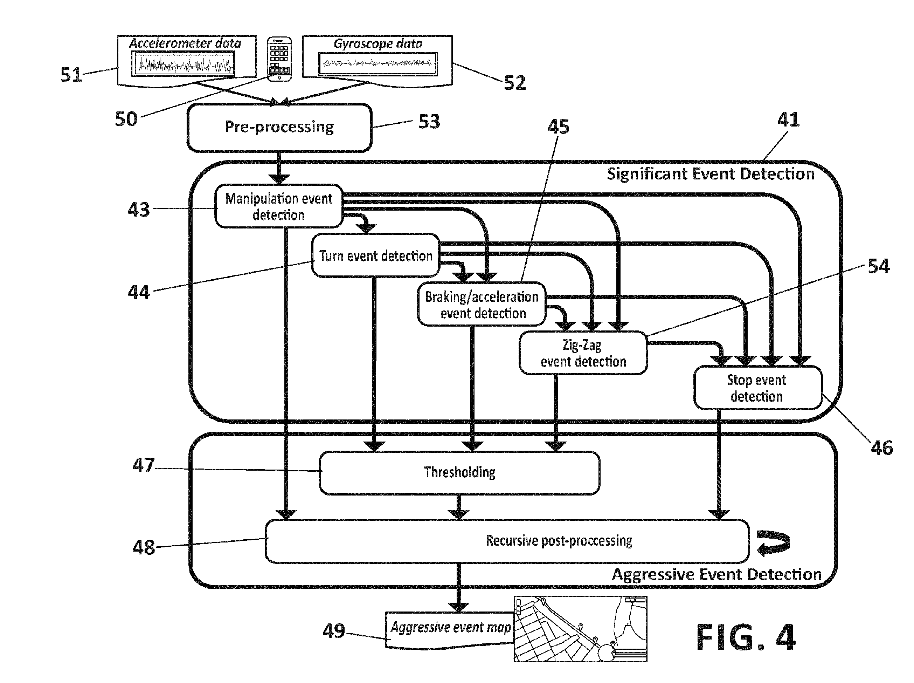

The invention describes a process for obtaining significant driving events from a complete vehicle journey. Motion data from sensors embedded in a mobile device, as a smartphone, located in the vehicle (driver's pocket, glove compartment or any other location) are processed following a distributed processing scheme, where, according to one particular embodiment of the invention, the smartphone (50) (or Front-end) collects data from an accelerometer (51) and a gyroscope (52) shown in Figure 4. Then, these data are pre-processed and stored for its further transmission to a Processing module (or Back-end component). The processing module, once the motion data are received, generates a first set of significant driving events and, optionally, a second set of aggressive driving events.

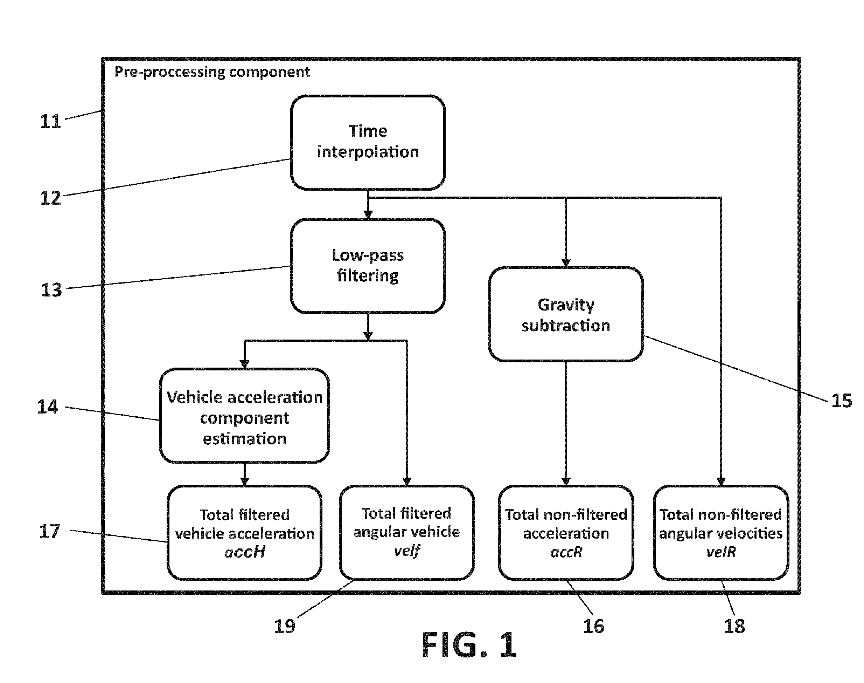

The pre-processing stage (11) running in the smartphone and shown in figure 1, includes according to one embodiment of the invention, a component (12) to interpolate sensor measurements provided by the smartphone (accelerometer and gyroscope in this embodiment). This interpolation process provides a fixed sampling rate for all the sensor data independently of its technological characteristics. A second component of this pre-processing stage applies low-pass filtering (13) to both accelerometer and gyroscope data; this filters-out high-frequency components not related to regular driving dynamics. Filtered accelerometer data is affected by earth gravity. Therefore, the effect of gravity on the accelerometer are estimated and removed by a third component (14), to keep only data related to vehicle acceleration. Besides the use of low-pass filtered information, raw (non-filtered) sensor data are used in an event detection algorithm to discriminate between regular driving events and manipulations or undesired movements of the smartphone.

A processing service is implemented in a processing module (or back-end module). According to different embodiments of the invention this processing module may even be included in the smartphone, but a preferred embodiment of the invention considers that the processing module is an independent module connected with the smartphone through a wireless telecommunication network. The event detection algorithm, implemented in this processing module, uses as input the raw and preprocessed data gathered from the previous pre-processing stage. Applying a short-time energy-based algorithm, it is computed instantaneous energy of all components of accelerometer and gyroscope signals; applied to both, raw and processed signals.

The Event Detection Algorithm runs in two different steps: firstly significants events (41) and then aggressive events (42).

For the significants events, time segments with relevant amount of acceleration or gyro energies are detected. Due to the interrelationship between these different significant events, a hierarchical event identification procedure is used in a preferred embodiment:

- *Manipulation events* (31) are first identified from raw gyroscope energy data, as time segments with smartphone uncontrolled movements by its user or displacements. In this way manipulation intervals are excluded to be analyzed when searching for following significant events.
- *Turn events (32)* identification, based on filtered gyroscope energy, represents the second level of processing. Time segments or intervals with important gyro energy will be important to help in the detection of events as cornering or aggressive turning maneuvers.
- *Acceleration (braking/accelerating) (33) events* identification, from vehicle acceleration component information.
- *Zig-zag events* (35) are identified as two or more change lanes from the significant measurements of the accelerometer (lateral acceleration) not accompanied by any angular velocity. As it is produced by a string of sharp turns, the gyroscope does not have time to measure any angular velocity.
- Finally, the last level of hierarchical structure is composed by the detection of segments where the vehicle is stopped. *Stop events* (34) are detected by looking for segments with low levels of acceleration energy considering also the gyroscopes energy.

The output of this stage is a set of significant driving events. From this complete sequence of significant events, the Aggressive Events Detection component (42) may be applied to identify those related to aggressive driving maneuvers. The Aggressive Event Detection is based on a first filter of significant events based on the maximum value of acceleration energy within all segment. Then, those significant events above an event-specific threshold are analyzed attending to their context (surrounding events) to detect the final sequence of aggressive driving events. Through recursive analysis the time sequence of events is analyzed allowing, for example, to combine close aggressive acceleration and turn events into a single aggressive cornering or turn maneuver event, or, as in the preceding example, to identify an aggressive braking when a high acceleration event precedes a stop event.

**Embodiments of the invention**

Raw accelerometer (51) and gyroscope (52) data provided by a smartphone (50) located in a vehicle are inputs to the pre-processing module (53). Output information from this pre-processing module is used as input for a two-stage Event Detection Algorithm as shown in figure 4 (significant (41) and aggressive (42)) which provides the final information of aggressive driving events.

Different embodiments may choose different ways to implement the whole or some parts of the pre-processing module (53) in the smartphone, or the two-stage (significant and aggressive) Event Detection Algorithm in a back-end processing component or even having the whole system running in the smartphone.

Figure 1 represents one way of implementing this system. In the pre-processing component, (11), the three axis accelerations (ax, ay, az) and three gyro angular velocities (vx, vy, vz) provided by the smartphone are firstly resampled and interpolated (12) to have a stable and consistent sampling frequency for all data. The acceleration and angular velocity data is then filtered through low-pass filters (13). This can be done, for example, using a third order Butterworth filter with input x(n), output y(n) and coefficients a(1), a(2), a(3) and b(1), b(2), b(3), b(4). Filter coefficients are designed to define a low stop band enough to remove information not related to driving events:

$$y(n) = b(1)x(n) + b(2)x(n-1) + b(3)x(n-2) + b(4)x(n-3)$$
$$-a(1)y(n-1) - a(2)y(n-2) - a(3)y(n-3)$$

The use of low-pass filters to remove undesired high-pass noise can also mask strong spiky signals in acceleration and angular velocity caused by relevant driving maneuvers. To avoid this undesirable effect, other techniques for removing noise without compromising spiky information could be used. For example, embodiments may also include wavelet transform to spike detection, a technique that has provided excellent results in several biomedical applications on signals with dynamics similar to those of accelerometers and gyroscopes.

Filtered accelerometer data is further processed to derive vehicle acceleration component (related to driving events) (14). Any of the existing procedures can be used for estimating gravity vector $g$ (obtained, for example, by averaging the acceleration signal over a big-size window: 100 seconds) and projecting acceleration data over horizontal plane $a_{hor:}$

$$g = \frac{(axfil, ayfil, azfil)}{\| (axfil, ayfil, azfil) \|}$$

$$a_{hor} = afil - a_{ver} = afil - (afil \cdot g)$$

In one embodiment of the invention, the window used to estimate the gravity vector is defined accordingly with the segments where manipulation events are detected. That is, a new window for gravity estimation starts after a smartphone manipulation event is detected.

After vehicle acceleration component estimation, the pre-processing component obtains the following information set for each interpolated sampling period:

- *accR (16):* Module of the total acceleration with gravity compensation procedure (removing gravity from vehicle acceleration measured by the smartphone (15)) but without low-pass filtering:

$$accR = \sqrt{ax^2 + ay^2 + az^2}$$

- *accH* (*17*): Module of total filtered acceleration in the vehicle plane:

$$\text{accH} = \sqrt{axhor^2 + ayhor^2 + azhor^2}$$

- *velR (18):* Module of the total raw (before low-pass filtering) gyro angular velocity:

$$\text{velR} = \sqrt{vx^2 + vy^2 + vz^2}$$

- *velF (19):* Module of the total low-pass filtered gyro angular velocity:

$$\text{velF} = \sqrt{vxfil^2 + vyfil^2 + vzfil^2}$$

After pre-processing, a two-stage Event Detection Algorithm is applied to detect and identify aggressive driving events. The Event Detection Algorithm of this particular embodiment consists of an initial Significant Events Detection (41) component followed by an Aggressive Events Detection component (42).

The Significant Event Detection component (41) detects time segments or intervals corresponding to a set of significant events. The significant events may comprise the following: *Manipulation events (43):* smartphone uncontrolled movement or the user is manipulating the smartphone, so no driving events can be detected; *Turn events (44):* the vehicle is turning; *Zig-zag events (54):* the vehicle changes lanes twice in a short period of time; *Acceleration (brakinglacceleration) events (45):* the vehicle is accelerating or decelerating without turning; *Stop events (46):* the vehicle is stopped.

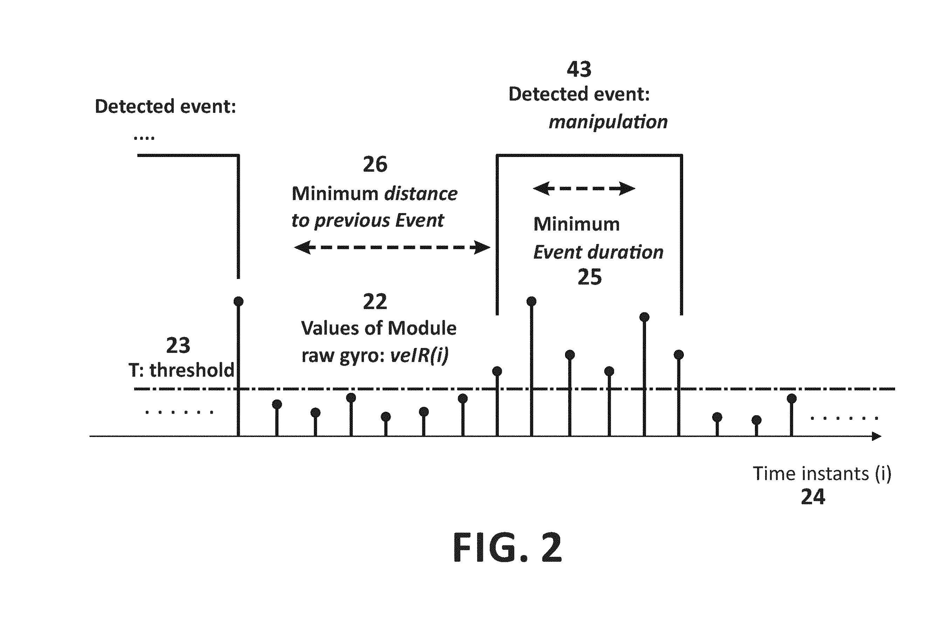

In one particular embodiment of the invention, the detection of any of these significant events is done using similar energy-based event detection algorithms, where energy can be computed from global accelerations or global angular velocities. For example, the detection of manipulation (43) events may be done using as input the module (22) of raw gyro velocities, *velR* (18). The event detection algorithm, showed in Figure 2, is implemented defining a threshold T (23), to find those time instants (24) where the energy (in this case, calculated from *velR*) is above the given threshold. A manipulation event can thus be detected when a sequence of consecutive time instants with *velR* above *T* achieves:

- Specific manipulation minimum duration (25)
- Enough distance (26) from previous and next detected manipulation events.

Thus, manipulation event detection (being i a sampling period):

if *velR(i) > T* for *i* = 1: *N and* N > *MinimumManipulation*Duration In an alternative embodiment, other information from the actual usage of the smartphone could be collected and used to confirm the manipulation event.
In an alternative embodiment, all the available information, including durations, distance between events, acceleration and angular velocity data, is combined to detect manipulation events applying fuzzy logic rules or through different machine learning techniques.

Once an event is detected, it is represented by the following information:

- type of event (manipulation, turn, acceleration or stop)

- start time

- end time

- maximum value of total acceleration (*accH*) within segment

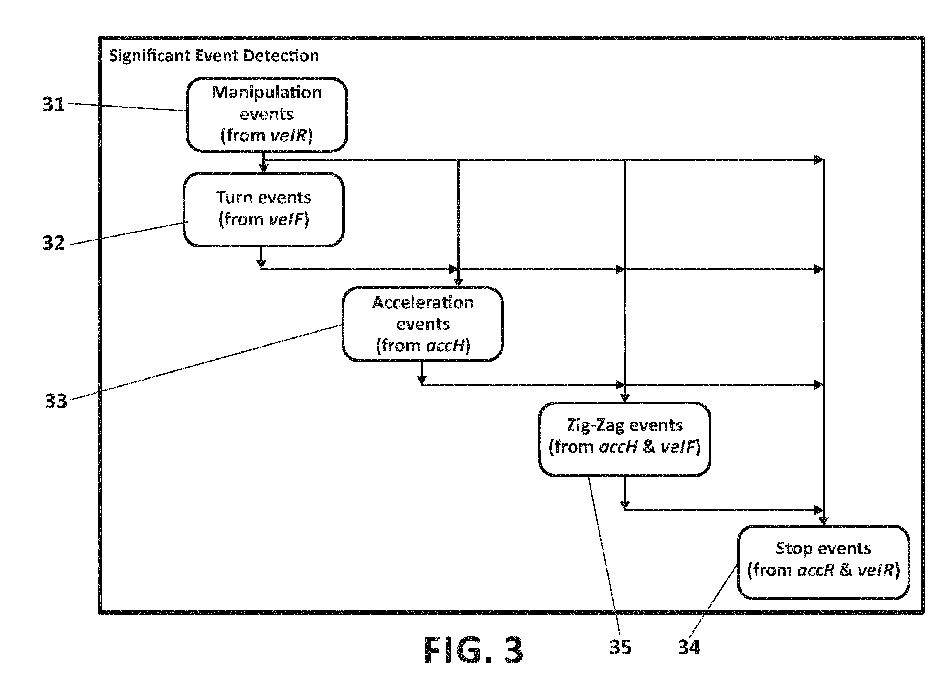

Due to the relationships between manipulation, stop and driving events, the detection of significant events is done in one particular embodiment following a hierarchical scheme, where events are detected according to their interdependences. More specifically, as shown in Figure 3:

- *Manipulation events* (31) are first detected using previously described energy-based event detector from raw angular velocity, *velR* (18). They excludes any further search for other events in the detected smartphone manipulation interval.

- Gyro or *turn events* are then detected (32), as they are relevant to the detection of accelerations/brakes and stop events. The detection of turn events may be done, for example, using a similar energy-based event detector, but using the low-pass filtered gyro velocity, *velF* (19) instead of *velR,* and excluding previously detected time intervals with manipulation events, if any. As it has been pointed out before, turn-events are characterized by their start and end times, together with a maximum value that corresponds to the maximum value of the total acceleration during the turn interval. This maximum value is used by the Aggressive Event Detection component to detect cornering or aggressive turning maneuvers. It is also relevant pointing out that due to common gyro drift problems some existing bias compensation procedures may be applied to dynamically compensate the module of gyro velocity before starting the event detection process.

- After manipulation and turn events detections, *acceleration events* (including indistinctively both due to accelerating and braking) are detected (33). Again, in a particular embodiment, acceleration events may be obtained, for example, using an energy-based event detector working on the low-pass filtered vehicle acceleration, *accH* (17). Following the hierarchical process of event detection, time intervals corresponding to previously detected manipulation and turn events are excluded from the search of acceleration events. For example, some embodiments may apply techniques for adaptive estimation of background and activity thresholds from instantaneous measures of acceleration energy to detect zones with relevant acceleration values.

- Zig zag events: change lanes in a short period of time means that a vehicle is maybe avoiding an obstacle. A zig zag event (at least two changes) or a simple change may be identified by registering lateral accelerations without significant angular velocities. This is the main difference against a turn because, when a vehicle changes lanes sharply, the gyroscope barely observes any angular velocity.

- At the last level of the hierarchical procedure, those segments where the vehicle is stopped (34) are detected excluding time intervals where manipulations, turns or accelerations have been previously found. In this case, these events may be identified using a variance-based detection process looking for intervals with low levels (below a threshold) of *accR (16),* module of the total acceleration without low-pass filtering and *velR (18),* module of the squared raw gyro velocities before low-pass filtering. Gyroscopes energy is used to avoid false detections of stop events when the vehicle is peacefully moving along a road as, in these situations, gyro energy can detect vehicle turns incompatible with the vehicle being stopped.

After a sequence of significant events has been detected for a particular vehicle journey, the Aggressive Events Detection component (42) is applied to identify those related to aggressive driving maneuvers.

The Aggressive Event Detection Algorithm of the Aggressive Events Detection Component is based on a first filter or thresholding (47) where the maximum energy value reached by each basic event is compared to event-specific thresholds to save only aggressive acceleration and turn events characterized by their high energy. Different thresholds may be used based on different acceleration sources acting during different types of driving maneuvers. For manipulation and stop identification components, all events of these types are retained. In other embodiments of the invention, instead of using only energy information, relevant events could be detected using well-known discriminative techniques such as LDA (Linear Discrimination Analysis) or SVM (Support Vector Machines) working on a feature vector including: event duration, maximum acceleration value and position inside the event, maximum angular velocity as well as distances to previous events.

Final collection of those selected relevant events is then recursively analyzed or post-processed (48) attending to their context (surrounding events) to detect the final sequence of aggressive driving events. Through this recursive post-processing the time sequence of aggressive events is analyzed allowing, for example, to combine close aggressive acceleration and gyro events into a single aggressive cornering or turn maneuver event. Context is also used to discriminate between aggressive braking and accelerating: a significant acceleration event before a stop event will be tagged as a hard brake event while after a stop event will be identified as an aggressive acceleration.

Different embodiments include different techniques, as, for example, rule-based or statistical; to identify aggressive events from the information provided by the sequence of previously detected significant events.

Some embodiments of the invention distinguish between acceleration and braking events by applying mechanisms such as, for example, using machine learning techniques to detect specific patterns of the braking and high-acceleration events based on its duration and the shape of the acceleration energy signal or its frequency-domain representation.

Some embodiments consider the appearance of aggressive accelerations in relation to stop events. In that way, an aggressive acceleration just after a stop event is detected as a braking event. Some embodiments also use this information to obtain the actual orientation vector, defined from the three axis accelerometer data, which represents the braking maneuvers direction. This braking orientation vector could be used to differentiate between hard accelerations or braking in other aggressive acceleration events. Even an algorithm may be applied to distinguish between acceleration and braking events by analyzing the orientation vectors from all the detected relevant events.

A summary of the whole processing of the aggressive event detection system, including pre-processing, Basic Event Detection and Aggressive Event Detection is shown in Figure 4. In one embodiment of the invention, aggressive events detected are shown on a map (49) along the itinerary covered by the vehicle.

**Claims**

1. Method for detecting driving events of a vehicle **characterized by** comprising the steps of:

   a) obtaining at least one motion data signal from sensors of a mobile device located in the vehicle;
   b) sending the at least one motion data signal from the sensors to a processing module;
   c) computing, in the processing module, an energy measurement of the at least one motion data signal,
   d) selecting time segments where the energy measurement of the at least one motion data signal exceeds a first threshold;
   e) analyzing the at least one motion data signal in said time segments;
   f) assigning a driving event to each time segment, based on step e).

2. Method according to claim 1 further comprising the steps of:

   - comparing, in each time segment corresponding to a driving event, a maximum energy value of the at least one motion data signal with a second threshold;
   - in the case of said the second threshold is exceeded in a certain time segment, determining an aggressive driving event for said time segment.

3. Method according to any one of previous claims further comprising combining two or more close driving events into a single driving event.

4. Method according to any one of previous claims wherein assigning a driving event to a time segment further comprising analyzing surrounding driving events.

5. Method according to any one of the previous claims further comprising filtering, through at least one low-pass filter, the at least one motion data signal to remove high-pass frequencies, which are not related to driving events.

6. Method according to any one of the previous claims further comprising resampling and interpolating the at least one motion data signal at a certain sampling frequency.

7. Method according to any one of the previous claims further comprising estimating an effect of the gravity in the at least one motion data signal and compensating said effect before sending the at least one motion data signal to the processing module.

8. Method according to any one of the previous claims wherein obtaining the at least one motion data signal comprises measuring an acceleration value of the mobile device, using an accelerometer sensor embedded in the mobile device.

9. Method according to any one of the previous claims wherein obtaining the at least one motion data signal comprises measuring an angular velocity of the mobile device, using a gyroscope sensor embedded in the mobile device.

10. Method according to any of the previous claims wherein the driving events are selected from the following types: manipulation events, turn events, acceleration events , stop events and zig-zag events.

11. Method according claim 10 wherein a driving event comprises the following information: type of event; start time of the event; end time of the event; and maximum value of the motion data signal within the time segment assigned.

**12.** Method according to any one of previous claims where analyzing the at least one motion data signal further comprising using an orientation vector associated to the vehicle, being said orientation vector based on a combination of previous acceleration and stop events.

**13.** System for detecting driving events of a vehicle **characterized by** comprising:

- a mobile device located in the vehicle with sensors configured for obtaining at least one motion data signal; the mobile device is configured for sending the at least one motion data signal obtained by the sensors to a processing module;
- a processing module configured for computing an energy measurement of the at least one motion data signal; selecting time segments where the energy measurement of the at least one motion data signal exceeds a first threshold; analyzing the at least one motion data signal in said time segments; and assigning a driving event to each time segment, based on the motion data signal analyzed.

**14.** System according to claim 13 wherein the mobile device is a smartphone.

**15.** A computer program product comprising computer program code adapted to perform the method according to any of the claims 1-12 when said program code is executed on a computer, a digital signal processor, a field-programmable gate array, an application-specific integrated circuit, a micro-processor, a micro-controller, or any other form of programmable hardware.

Pre-proccessing component

Time interpolation

Low-pass filtering

Gravity subtraction

Vehicle acceleration component estimation

Total non-filtered angular velocities *velR*

Total non-filtered acceleration *accR*

Total filtered angular vehicle *velf*

Total filtered vehicle acceleration *accH*

11

12

13

14

15

16

17

18

19

# FIG. 1

**FIG. 2**

EP 2 975 867 A1

**FIG. 3**

Significant Event Detection

Manipulation events (from *velR*) — 31

Turn events (from *velF*) — 32

Acceleration events (from *accH*) — 33

Zig-Zag events (from *accH & velF*) — 35

Stop events (from *accR & velR*) — 34

EP 2 975 867 A1

12

Accelerometer data

51

Gyroscope data

52

50

Pre-processing 53

45

41

**Significant Event Detection**

43 Manipulation event detection

44 Turn event detection

Braking/acceleration event detection

54

Zig-Zag event detection

Stop event detection

46

47 Thresholding

48 Recursive post-proccessing

**Aggressive Event Detection**

49 Aggressive event map

# FIG. 4

**EP 2 975 867 A1**

Europäisches Patentamt
European Patent Office
Office européen des brevets

## EUROPEAN SEARCH REPORT

Application Number

EP 14 38 2282

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DERICK A JOHNSON ET AL: "Driving style recognition using a smartphone as a sensor platform", INTELLIGENT TRANSPORTATION SYSTEMS (ITSC), 2011 14TH INTERNATIONAL IEEE CONFERENCE ON, IEEE, 5 October 2011 (2011-10-05), pages 1609-1615, XP032023473, DOI: 10.1109/ITSC.2011.6083078 ISBN: 978-1-4577-2198-4 * the whole document * | 1-15 | INV. H04W4/02 H04W4/04 G08G1/01 B60W40/09 |
| X | EREN H ET AL: "Estimating driving behavior by a smartphone", INTELLIGENT VEHICLES SYMPOSIUM (IV), 2012 IEEE, IEEE, 3 June 2012 (2012-06-03), pages 234-239, XP032453089, DOI: 10.1109/IVS.2012.6232298 ISBN: 978-1-4673-2119-8 * p. 235-236, section II. Theory and stages of system diagram * | 1,13,15 | |
| A | KUN LI ET AL: "Personalized Driving Behavior Monitoring and Analysis for Emerging Hybrid Vehicles", 18 June 2012 (2012-06-18), PERVASIVE COMPUTING, SPRINGER BERLIN HEIDELBERG, BERLIN, HEIDELBERG, PAGE(S) 1 - 19, XP047009408, ISBN: 978-3-642-31204-5 * section 3.2 Vehcile Movement Sensing; page 6 - page 9 * | 1-15 | TECHNICAL FIELDS SEARCHED (IPC) H04W G08G B60W G08B |

-/--

The present search report has been drawn up for all claims

| Place of search | Date of completion of the search | Examiner |
|---|---|---|
| The Hague | 28 January 2015 | Pariset, Nadia |

EPO FORM 1503 03.82 (P04C01)

Europäisches
Patentamt

European
Patent Office

Office européen
des brevets

# EUROPEAN SEARCH REPORT

Application Number

EP 14 38 2282

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JIANGPENG DAI ET AL: "Mobile phone based drunk driving detection", PERVASIVE COMPUTING TECHNOLOGIES FOR HEALTHCARE (PERVASIVEHEALTH), 2010 4TH INTERNATIONAL CONFERENCE ON-NO PERMISSIONS, IEEE, PISCATAWAY, NJ, USA, 22 March 2010 (2010-03-22), pages 1-8, XP031688169, ISBN: 978-963-9799-89-9 * the whole document * | 1-15 | |
| A | HONGYANG ZHAO ET AL: "Join driving: A smart phone-based driving behavior evaluation system", 2013 IEEE GLOBAL COMMUNICATIONS CONFERENCE (GLOBECOM), IEEE, 9 December 2013 (2013-12-09), pages 48-53, XP032604606, DOI: 10.1109/GLOCOM.2013.6831046 [retrieved on 2014-06-11] * the whole document * | 1-15 | |

-----

-----

-/--

TECHNICAL FIELDS
SEARCHED    (IPC)

The present search report has been drawn up for all claims

| Place of search | Date of completion of the search | Examiner |
|---|---|---|
| The Hague | 28 January 2015 | Pariset, Nadia |

EPO FORM 1503 03.82 (P04C01)

**EP 2 975 867 A1**

| | Europäisches Patentamt European Patent Office Office européen des brevets | **EUROPEAN SEARCH REPORT** | Application Number EP 14 38 2282 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JARRETT ENGELBRECHT ET AL: "Recognition of driving manoeuvres using smartphone-based inertial and GPS measurement", PROCEEDINGS OF THE 1ST INTERNATIONAL CONFERENCE ON THE USE OF MOBILE ICT IN AFRICA 2014; 9-10 DECEMBER 2014, STIAS CONFERENCE CENTRE, STELLENBOSCH, SOUTH AFRICA, STELLENBOSCH UNIVERSITY, DEPARTMENT OF , 1 January 2014 (2014-01-01), pages 88-92, XP008174514, ISBN: 978-0-7972-1533-7 Retrieved from the Internet: URL:http://scholar.sun.ac.za/handle/10019.1/96150 [retrieved on 2015-01-26] * the whole document * | 1-15 | |

-----

TECHNICAL FIELDS
SEARCHED (IPC)

The present search report has been drawn up for all claims

| Place of search | Date of completion of the search | Examiner |
|---|---|---|
| The Hague | 28 January 2015 | Pariset, Nadia |

EPO FORM 1503 03.82 (P04C01)